# EUROPEAN PATENT SPECIFICATION

(11) **EP 3 826 832 B1**
(45) Date of publication and mention of the grant of the patent: **06.09.2023**
(21) Application number: 19840363.6
(22) Date of filing: 19.07.2019
(51) Int. Cl.: B42D 25/47, B42D 25/36, G02B 5/12, G02B 5/124, G02B 5/128, G02B 5/20, G02B 5/22, G02B 5/26, B32B 3/18, B32B 7/12

(54) **A PATTERNED WAVELENGTH-SELECTIVE FILM**
GEMUSTERTE WELLENLÄNGENSELEKTIVE FOLIE
FILM À SÉLECTION DE LONGUEUR D'ONDE À MOTIF

(30) Priority: 24.07.2018 US 201862702642 P
(43) Date of publication of application: 02.06.2021
(73) Proprietor: 3M Innovative Properties Company, Saint Paul, Minnesota 55133-3427 (US)
(72) Inventor: CHEN-HO, Kui, Saint Paul, Minnesota 55133-3427 (US); DUNN, Douglas S., Saint Paul, Minnesota 55133-3427 (US); STAY, Matthew S., Saint Paul, Minnesota 55133-3427 (US); THEIS, Daniel J., Saint Paul, Minnesota 55133-3427 (US); STRAND, John T., Saint Paul, Minnesota 55133-3427 (US); DODDS, Shawn C., Saint Paul, Minnesota 55133-3427 (US); METZLER, Thomas J., Saint Paul, Minnesota 55133-3427 (US); GOTRIK, Kevin W., Saint Paul, Minnesota 55133-3427 (US); JONES, Scott J., Saint Paul, Minnesota 55133-3427 (US)
(74) Representative: Vossius & Partner Patentanwälte Rechtsanwälte mbB
(86) International application number: PCT/IB2019/056211
(87) International publication number: WO 2020/021419

(56) References cited:
- EP-A1- 2 905 767
- US-A1- 2002 142 121
- US-A1- 2003 211 299
- US-A1- 2010 277 801
- US-A1- 2015 140 292

## Description

### Technical Field

The present disclosure relates to a patterned wavelength-selective film, a method of making a patterned wavelength-selective film, and a light directing article with a patterned wavelength-selective film.

### Background

Wavelength selective materials can be used to impart an image on a substrate, such as, for example a bar code. US Patent 8,865,293 discloses embedding infrared-detectable images on a light directing film. Light directing articles have an ability to manipulate incoming light and typically include an optical element such as a bead or prism. Retroreflective articles are light directing articles that include at least a retroreflecting element. Retroreflective elements reflect incident light back towards the direction of the light source. Retroreflecting elements include cube-corner prismatic retroreflectors and beaded retroreflectors. Retroreflective articles are used for road signs, license plates, and pavement markings because they are visibly apparent to the driver in daytime and nighttime when illuminated by the vehicle. Placement of detectable images on a retroreflective film allows for the embedded images to be seen in both daytime and nighttime conditions.

EP 2 905 767 A1 discloses the preamble of claim 1.

### Summary

Wavelength-selective films are visibly apparent under the selective wavelength. Wavelength-selective films typically reflect off axis, absorb, or scatter the selected wavelength and therefore can provide high-contrast against a background when applied in a pattern on a substrate. However, it is difficult to apply unique patterned embedded images from film. Disclosed is a cost-effective method and construction of applying a patterned wavelength-selective film to a substrate. In some embodiments, the substrate is a retroreflective film or the substrate is applied to a retroreflective film. When the patterns of wavelength-selective films are used on a retroreflective film, the high contrast allows the pattern to be detected in both daytime and nighttime.

The disclosed patterned wavelength-selective material and process for making the patterned wavelength-selective material use selectively located barriers on the adhesive regions. A structurally weak wavelength-selective material includes portions that contact the adhesive regions and break to remain in contact with the adhesive. The wavelength-selective material does not contact the adhesive regions covered by the barrier and is removed leaving a wavelength-selective film in a pattern at the adhesive regions.

The subject-matter of the present invention is defined by the features of independent claim 1. Further preferred embodiments of the present invention are defined in the dependent claims. In particular, according to one embodiment of the present invention, a process for making a patterned wavelength-selective film comprises providing a substrate comprising an adhesive surface, providing a wavelength-selective film, applying a barrier at a second region and between the adhesive surface of the substrate and the wavelength-selective film separating the wavelength-selective film from the adhesive surface at a first region, securing the wavelength-selective film to the adhesive surface at the first region, apart from the second region, removing portions of the wavelength-selective film from the second region to form patterned portions of the wavelength-selective film on the substrate at the first region.

In one embodiment, the substrate is an optically active film. In one embodiment, the optically active film is a retroreflective film. In one embodiment, the process further comprises applying a transparent layer to the substrate. In one embodiment, the patterned portions of the wavelength selective film are between the transparent layer and the substrate. In one embodiment, the substrate is a transparent layer. In one embodiment, the transparent layer is applied to an optically active film.

In one embodiment, the wavelength-selective film is transparent in the visible light spectrum. In one embodiment, the wavelength-selective film reflects, absorbs, or scatters in the infrared or near infrared light spectrum.

In one embodiment, the wavelength-selective film is structurally weak. In one embodiment, the adhesion between the wavelength-selective film and the adhesive is greater than the force keeping the wavelength-selective film intact. In one embodiment, the wavelength-selective film comprises an array of sections with cuts extending partially or entirely through a thickness of the wavelength selective film, and wherein the cuts are continuous or discontinuous along an extending surface of the wavelength-selective film. In one embodiment, the wavelength-selective film comprises a transfer stack of layers comprising a release layer compromising a metal layer or doped semi-conductor layer, an acrylate layer overlying the release layer, a wavelength-selective layer overlying the acrylate layer, wherein a release value between the acrylate layer and the metal layer or doped semiconductor layer is from 2 to 50 grams per inch.

In one embodiment, the process further comprises capturing a continuous edge of the wavelength-selective film with the portions of the wavelength-selective film broken at the first region removed.

In one embodiment, the barrier is in a unique pattern. In one embodiment, the barrier is a non-adhesive print applied to the adhesive surface and remains with the adhesive surface following removal of the wavelength-selective film from the second regions. In one embodiment, the barrier is a release print applied to the wavelength-selective film, and remains with the wavelength-selective film following removal of the wavelength-selective film from the second regions. In one embodiment, the adhesive surface is a full adhesive or patterned adhesive over substantially the entire substrate.

In one example, a wavelength-selective film comprises a substrate, adhesive on the substrate, a barrier at a second region on the adhesive on the substrate, a wavelength-selective film in contact with the barrier at the second region and secured to the adhesive at a first region. In one example, the adhesive is a full adhesive or patterned adhesive over substantially the entire substrate. In one example, the barrier is arranged in a unique pattern.

In one example, a patterned wavelength-selective film comprises a substrate comprising an adhesive surface having a first region with a wavelength-selective film and a second region with a barrier, an optically active substrate, wherein the substrate is secured to the optically active substrate with the barrier and wavelength-selective film between the substrate and the optically active substrate. In one example, wavelength-selective film is arranged in a unique pattern. In one example, the optically active substrate is a retroreflective substrate. In one example, the substrate is a transparent film. In one example, the patterned wavelength-selective film further comprises a transfer adhesive on the optically active substrate to secure the substrate.

### Brief Description of Drawings

FIG. 1a is a front view of one embodiment of a substrate with a patterned wavelength-selective film apparent in a first lighting condition;
FIG. 1b is a front view of the patterned wavelength-selective film from FIG. 1a with the wavelength-selective film not apparent in a second lighting condition;
FIG. 2a is an exploded side sectional view of an embodiment of the substrate with the patterned wavelength-selective film of FIG. 1a through line 3B-3B;
FIG. 2b is an assembled side sectional view of the substrate and patterned wavelength-selective film of FIG. 2a;
FIG. 3a is an exploded side sectional view of an embodiment of the substrate with the patterned wavelength-selective film of FIG. 1a through line 3B-3B;
FIG. 3b is an assembled side sectional view of the substrate and patterned wavelength-selective film of FIG. 3a;
FIG. 4 is a side sectional view of one embodiment of the substrate with the patterned wavelength-selective film of FIG. 2b applied to a light directing article;
FIG. 5 is a side sectional view of one embodiment of a process for making a substrate with a patterned wavelength-selective film;
FIG. 6 is a side sectional view of one embodiment of a transfer film for use as the wavelength-selective feed film in a process such as shown in FIG. 5;
FIG. 7 is a perspective view of one embodiment of a process for making a substrate with a patterned wavelength-selective film, wherein the wavelength-selective feed film includes an array of sections.

While the above-identified drawings and figures set forth embodiments of the invention, other embodiments are also contemplated, as noted in the discussion. In all cases, this disclosure presents the invention by way of representation and not limitation. It should be understood that numerous other modifications and embodiments can be devised by those skilled in the art, which fall within the scope of this invention. The figures may not be drawn to scale.

### Detailed Description

The light directing article 100 has a substrate 200 with an adhesive 300 at a first area 112 and a wavelength-selective film 400 applied to the adhesive 300. Therefore, the wavelength-selective film 400 forms a pattern 112 on the light directing article 100. Second area 114 does not include the wavelength-selective film 400.

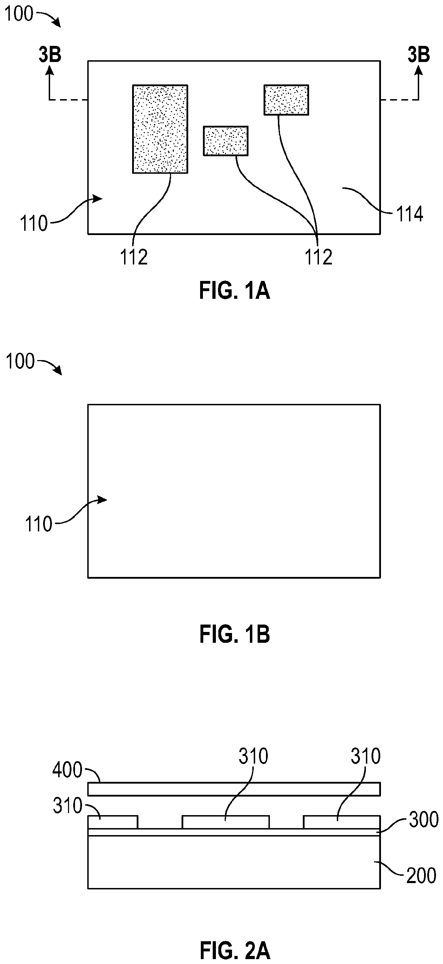

FIG. 1a is a front view of one embodiment of a light directing article 100 with a wavelength-selective film 400 in a pattern 112 on the first major surface 110 of a substrate 200. The lighting conditions in Fig. 1a are the matching wavelength to achieve a response from the wavelength-selective film 400 and provide contrast between the wavelength-selective film 400 in the pattern 112 and the second area 114 that does not include the wavelength-selective film 400. In one embodiment, the wavelength-selective film 400 is responsive in the infrared or near infrared light spectrum. In one embodiment, the wavelength-selective film 400 is responsive in the ultraviolet light spectrum.

FIG. 1b is a front view of the light directing article 100 from FIG. 1a under a different lighting condition than shown in FIG. 1a. In this embodiment, the lighting condition is not a matching wavelength to achieve a response from the wavelength-selective film 400 and therefore the pattern area 112 with the wavelength-selective film 400 is not distinctly apparent from the second area 114 that does not include the wavelength-selective film 400. In one embodiment, the lighting condition in FIG. 1b is in the visible light spectrum. In one embodiment, the wavelength-selective film 400 is transparent in the visible light spectrum.

The substrate 200 that supports the wavelength-selective film 400 can be any known material for supporting the wavelength-selective film 400 such as rigid or flexible paper, films, foil, plastics, metals, or composite materials. In one embodiment, the substrate 200 is an optically active substrate. An optically active substrate manipulates light, and in some instances, comprises optical elements. Some examples of optical elements include glass or ceramic bead, prisms, cube corner elements, microlenses, and other microstructured elements. For example, in one embodiment, the substrate 200 is retroreflective and therefore generally directs incoming light back towards the direction of the light source. A retroreflective substrate will return incoming light to improve the detectability of the pattern formed by the first areas 112 with improved contrast between the first areas 112 with the wavelength-selective material 400 and the second areas 114 without the wavelength-selective material.

An example is described for the embodiment shown in FIG. 1a and 1b, in the case that the substrate 200 is retroreflective and the wavelength-selective film 400 is visibly transparent and IR-reflective. When the light directing article 100 is exposed to an infrared (IR) light source as shown in FIG. 1a, the IR light at the second areas 114 retroreflects back to the light source so that the second areas 114 appear bright, while the first areas 112 containing the wavelength-selective film appear dark since the IR light at the first areas 112 is reflected off-axis by the wavelength-selective film and not returned back towards the direction of the light source. Under visible light conditions, as shown in FIG. 1b, the visible light passes substantially through the wavelength-selective film and is retroreflected over the whole surface of the light directing article 100 making the light directing article appear uniformly bright in the retroreflected light.

FIG. 2a is an exploded side sectional view of a substrate 200 covered with adhesive 300. Applied to the adhesive 300 is a barrier 310 at the second region 114. In this embodiment, the barrier 310 comprises a plurality of elements that can form a unique pattern. Exposed adhesive 300 remains at the first region 112. The adhesive 300 is typically a full or patterned coating of adhesive over substantially the entire substrate 200, like shown in FIG. 2a.

As shown in FIG. 2a, wavelength-selective film 400 is shown in the process of contacting the substrate 200. Wavelength-selective film 400 is placed into contact with exposed adhesive 300 at the first region 112 and the barrier 310 at the second region 114. The wavelength-selective film 400 will secure with the exposed adhesive 300 at the first region 112. The barrier 310 will not secure with the wavelength-selective film 400 and those portions of the wavelength-selective film 400 are removed. Therefore, upon removal of the wavelength-selective film 400, the barrier 310 remains with the substrate 200. In this embodiment, the barrier 310 may be referred to as a non-adhesive barrier as the wavelength-selective film 400 has less adhesion to the barrier 310 than to the adhesive 300.

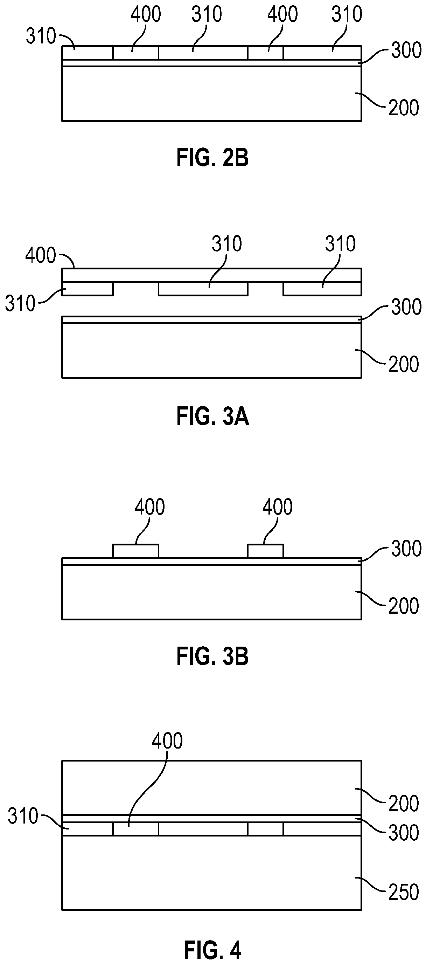

FIG. 2b is an assembled side sectional view of the substrate 200, adhesive 300, barrier 310, and patterned wavelength-selective film 400, after the wavelength-selective film 400 is removed from the substrate 200, adhesive 300, and barrier 310. In FIG. 2b, portions of the wavelength-selective film 400 that aligned with the barrier 310 have been removed.

FIG. 3a is an exploded side sectional view of a substrate 200 covered with adhesive 300. As shown in FIG. 3a, wavelength-selective film 400 is shown in the process of contacting the substrate 200. Applied to the wavelength-selective film 400 is a barrier 310. In this embodiment, the barrier 310 comprises a plurality of elements that can form a unique pattern. Wavelength-selective film 400 containing the barrier 310 is placed into contact with exposed adhesive 300. The adhesive 300 is typically a full or pattern coating of adhesive over substantially the entire substrate 200, like shown in FIG. 3a. The wavelength-selective film 400 will secure with the exposed adhesive 300 at the first region 112. The barrier 310 in contact with the exposed adhesive 300 forms the second region 114. The barrier 310 will not secure with the adhesive 300 and those portions of the wavelength-selective film 400 are removed. Therefore, upon removal of the wavelength-selective film 400, the barrier 310 removes with the wavelength-selective film 400 at the second region. In this embodiment, the barrier 310 may be referred to as a release barrier as the barrier 310 releases with the wavelength-selective 400 film from securement to the adhesive 300.

FIG. 3b is an assembled side sectional view of the substrate 200, adhesive 300, and patterned wavelength-selective film 400, after the wavelength-selective film 400 and the barrier 310 are removed from the substrate 200 and adhesive 300. In FIG. 3b, portions of the wavelength-selective film 400 at the barrier 310 have been removed.

FIGS. 2b and 3b result in a substrate 200 containing a patterned wavelength-selective film 400. The substrate 200 containing a patterned wavelength-selective film 400 such as shown in FIGS. 2b or 3b can be further applied to other substrates.

FIG. 4 is a side sectional view of one embodiment of the substrate 200 with a patterned wavelength-selective film 400 applied to a light directing substrate 250. This embodiment depicts the substrate 200 and patterned wavelength-selective film 400 of FIG. 2b applied to a light directing substrate 250. However, it is understood that the embodiment shown in FIG. 3b may also be applied to a light directing substrate 250. The substrate 200 containing the patterned wavelength-selective film 400 may be secured to the light directing substrate 250 with adhesive.

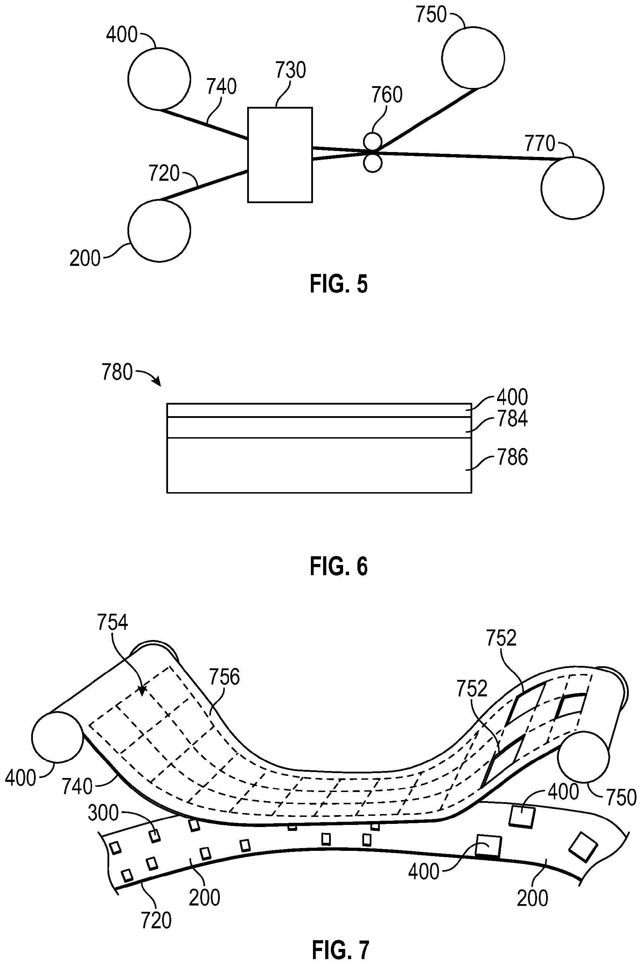

FIG. 5 is side sectional view of one embodiment of a process for making a substrate 200 with a patterned wavelength-selective film 400. The substrate 200 coated with adhesive 300 and wavelength selective film 400 are provided. A barrier application station 730 applies the barrier 310 onto one of the wavelength-selective film 400 or the adhesive surface 300 of the substrate 200. Barrier application can be by any number of known pattern coating or printing techniques. For example, if a regular repeating pattern of barrier 310 is desirable, then any pattern coating or printing process such as rotary printing, gravure printing, screen printing, or flexographic printing can be used to apply the barrier 310 to either the wavelength-selective film 400 or the substrate 200. In one embodiment, it may be desirable to create unique patterns of barrier 310. Therefore, a digital printing process such as ink jet printing can be used to apply the barrier 310 to either the wavelength-selective film 400 or the substrate 200.

Following application of the barrier 310 to one of the wavelength-selective film 400 or substrate 200, the wavelength-selective film 400 and the surface of adhesive 300 on the substrate 200 come into contact at a nip 760. Following the nip 760, a return wavelength selective film 750 of the wavelength selective film 400 separates from the combined wavelength-selective film 400, substrate 200 and adhesive 300. The wavelength-selective film 400 is structurally weak so portions will break when adhered to the adhesive 300. A patterned substrate return film 770 containing the substrate 200, adhesive 300, and portions of the wavelength-selective film 400 is formed and collected.

The wavelength-selective film 400 is structurally weak so portions will break when adhered to the adhesive 300. The relative adhesion of the wavelength-selective film 400 to the adhesive 300 it contacts is a greater force than the force to keep the wavelength-selective film 400 intact.

An embodiment of a wavelength-selective film 400 that is structurally weak so portions will break when adhered to the adhesive 300 is a transfer article 780. FIG. 6 is a side sectional view of one embodiment of a transfer article 780 for use as the wavelength-selective film 400 in a process such as shown in FIG. 5. The transfer articles 780 are described in PCT patent application titled "Transfer Articles" PCT/IB2018/051832 (published under WO 2018 178 802) filed on March 19, 2018 (Attorney Docket 79204WO003), and PCT patent application titled "Transfer Articles" PCT/IB2018/051833, published under WO 2018 178 803, (Attorney Docket 79250WO004).

The transfer article 780 comprises a release layer 786, wherein the release layer 786 comprises a metal layer or a doped semiconductor layer, a first acrylate layer 784 overlaying the release layer 786, and a function layer 400 overlaying the first acrylate layer, wherein a release value between the release layer 786 and the first acrylate layer 784 is from 2 to 50 grams per inch. The functional layer 400 is the wavelength-selective film. The function layer 400 can be very thin and easily breakable. In some embodiments, the function layer 400 is 0.03 to 5 microns thick. In some embodiments, the function layer 400 is 0.03 to 2 microns thick. In some embodiments, the function layer 400 is 0.03 to 1 micron thick. In these cases, the transfer article 780 is inherently structurally weak and does not need additional physical cuts to detach a pattern of the function layer 400.

In the embodiment where the transfer article 780 is the input wavelength-selective film 400 used in the process described in FIG. 5, at the nip 760 the wavelength-selective film 400, barrier 310, adhesive 300, and substrate 200 are in contact. A portion of the wavelength-selective film 400 in contact with the adhesive 300 removes from the transfer article 780 and remains secured to the adhesive 300 resulting in the patterned wavelength-selective film 400 such as shown in FIG. 1a.

In some instances, a physical cut may be needed to weaken the wavelength-selective film 400. FIG. 7 is a perspective view of one embodiment of a process for making a substrate 200 with a patterned wavelength-selective film 400, wherein the wavelength-selective film 400 comprises a plurality of cut sections 754 to substantially weaken the structure of the wavelength-selective film 400. FIG. 7 shows the wavelength-selective film 400 combining with the exposed adhesive surface 300 of the substrate 200 after application of the barrier layer 310 (not shown) at a nip (however the nip rollers are not shown in this image). In one embodiment, these cut sections 754 could extend only partially through the thickness of the wavelength-selective film 400 to create weakened regions of the wavelength-selective film 400. In one embodiment, the cut sections 754 may extend entirely through the thickness of the wavelength-selective film 400. In one embodiment, the cut sections 754 may be continuous or discontinuous along to the extending surface of the wavelength-selective film 400. For example, FIG. 7 shows discontinuous cut sections 754 in the extending surface of the wavelength-selective film 400. Following joining of the substrate 200, adhesive 300, and wavelength-selective film 400 after application of the barrier 310, break portions 752 of the wavelength-selective film 400 in contact with the exposed adhesive 300 will separate from the return wavelength-selective film 750 and remain secured to the adhesive 300 and substrate 200. Typically, at least one side of the wavelength-selective film 400 maintains a continuous edge 756 so that the return wavelength-selective film 750 has a portion to maintain continuity for winding.

The embodiment shown in FIG. 7 shows barrier 310 applied to portions of the adhesive surface 300 of the substrate 200 prior to the combination of the wavelength-selective film 400, adhesive 300, and substrate 200. It is understood that as described above, the barrier 310 can be applied instead to portions of the wavelength-selective film 400 and then the coated wavelength-selective film 400, adhesive 300, and substrate 200 can be combined as shown in FIG. 7.

In one embodiment, the wavelength-selective film 400 may be delivered by a transporting film, which may be secured together by an adhesive or a static force. A transporting film can aid in processing and handling of the wavelength-selective film 400. If a transporting film is provided, then the adhesion between the wavelength-selective film 400 and the transporting film is less than the adhesion between the wavelength-selective film 400 and the adhesive 300 to allow for transfer of the wavelength-selective film to the adhesive 300. In one embodiment, the peel adhesion between the adhesive 300 and wavelength-selective film 400 is at least 54 N/m (5 ounces per inch (oz/in)), 164 N/m (15 oz/ in), 274 N/m (25 oz/in), 383 N/m (35 oz/in), 493 N/m (45 oz/in), 602 N/m (55 oz/in) greater than the peel adhesion between the wavelength-selective film 400 and transporting film.

In one embodiment, the wavelength-selective film 400 is a film coated or embedded with wavelength-selective material, such as, for example, pigments, dyes, pearlescent pigments, coated mica, surface coated ceramic beads, or other materials with light absorbing, reflecting, or scattering properties.

It is understood that more than one wavelength-selective material can be used on any one particular light directing article 100. For example, in one embodiment a first wavelength-selective film that is responsive in a first light spectrum, such as infrared light, and visibly transparent can be used in one portion of the light directing article 100, and a second wavelength-selective film that is responsive in a second light spectrum, such as ultraviolet light, and visibly transparent can be used on either the same area or a different area of the light directing article 100.

Wavelength-selective film may be any film design to provide a response at a given wavelength. In one embodiment, the wavelength-selective film 400 maybe infrared-reflecting material, for example, a multilayer optical film. The multi-layer optical film chosen for any specific implementation will depend on the desired optical, structural, and durability characteristics. As such, desirable multi-layer optical films will vary based on the intended application. Some exemplary multi-layer optical films are described in, for example, U.S. Pat. No. 6,024,455 and PCT Publication No. WO 95/17692. Exemplary commercially available multi-layer optical films include, for example, 3M Solar Reflective Film, manufactured by 3M Company of St. Paul. The transmission spectrum of a particular multi-layer optical film depends, in part, on the optical thickness of the individual layers along the various axes, and is substantially determined by the well-known Fresnel coefficient. Films can be designed to reflect infrared, visible, or ultraviolet light by choice of the appropriate optical thicknesses. Films may also be designed to exhibit a spectral shift in percent reflectance and transmission as a function of entrance angle of incident light. Consequently, visibility of the infrared-reflecting material may differ based on the angle at which the optically active article is viewed. The desired relationship between refractive indices of the individual layers can be achieved by selection of appropriate materials and appropriate processing conditions.

Alternatively or in combination, the wavelength-selective film 400 may include a light reflecting or absorbing dye or pigment, such as an infra-red reflecting or absorbing dye or pigment. Exemplary descriptions of such dyes may be found in, for example, U.S. Publication No. 2007/0082963. Commercially available infra-red reflecting dyes include, for example, those manufactured by H.W. Sands Corporation of Juniper, Florida, and Epolin Corporation of Newark, N.J. One exemplary advantage of multi-layer optical film usage, especially multi-layer optical films with high visible light transmission, is that unlike near infra-red absorbing dyes, tinting or color change as a function of entrance angle of incident light can be largely avoided or minimized. These light reflecting or absorbing dyes or pigments can be incorporated into the wavelength-selective film 400 by conventional methods such as solution coating or vacuum coating.

In one wavelength, such as a visible wavelength, the transparency of the wavelength selective film 400 can be > 90%, >80%, >70%, >60%, or >50%. In the other wavelength, such as IR, near-IR, or ultraviolet wavelength, the transparency of the wavelength-selective film 400 can be <40%, <30%, <20%, <10%, or <5%.

The substrate 200 chosen for any specific implementation will depend on the desired optical, structural, and durability characteristics. Various materials for substrate 200 will be described below, and these descriptions apply to substrate 250 as well as any additional substrate, which were described above. Any number of substrates can be used in combination with other substrates to achieve desired characteristics.

In the embodiments, such as described in FIGS. 2a, 2b, 3a, 3b, and 4, the substrate 200 is a film. The film may be a transparent film, that may include materials such a vinyl, urethanes, acrylic, and other films or coatings that provide the desired durability, flexibility, elasticity. In embodiments where it is desired that in the visible light spectrum the wavelength-selective material is transparent, a visibly transparent film should be used. Further, so that the transparent film substrate 200 does not interfere with the detection of the wavelength-selective film 400, the transparent film substrate 200 should also be transparent in the wavelength range that corresponds with the wavelength-selective film 400. The substrate could be a metal, foil, paper, or synthetic film and maybe applied to yet another substrate, such as described in FIG. 4.

The substrate 200 or further substrates 250 may be light directing and therefore optically active. Optically active materials include polarizing, reflective, and retroreflective substrates. An optically active material may contain optical elements, such as microstructures, prism, cube corners, microlenses, or glass or ceramic beads.

The term "retroreflective" as used herein refers to the attribute of reflecting an obliquely incident light ray in a direction antiparallel to its incident direction, or nearly so, such that it returns to the light source or the immediate vicinity thereof. Two known types of retroreflective sheeting are microsphere-based sheeting and cube corner sheeting (often referred to as prismatic sheeting). Microsphere-based sheeting, often referred to as "beaded" sheeting, employs a multitude of microspheres typically at least partially embedded in a binder layer and having associated specular or diffuse reflecting materials (e.g., pigment particles, metal flakes, vapor coats) to retroreflect incident light. Illustrative examples are described in, for example, U.S. Pat. No. 3,190,178 (McKenzie), U.S. Pat. No. 4,025,159 (McGrath), and U.S. Pat. No. 5,066,098 (Kult). Cube corner retroreflective sheeting, often referred to as "prismatic" sheeting, comprises a body portion typically having a substantially planar front surface and a structured rear surface comprising a plurality of cube corner elements. Each cube corner element comprises three approximately mutually perpendicular optical faces. Illustrative examples are described in, for example, U.S. Pat. No. 1,591,572 (Stimson), U.S. Pat. No. 4,588,258 (Hoopman), U.S. Pat. No. 4,775,219 (Appledorn et al.), U.S. Pat. No. 5,138,488 (Szczech), and U.S. Pat. No. 5,557,836 (Smith et al.). A seal layer may be applied to the structured surface to keep contaminants away from individual cube corners. Flexible cube corner sheetings, such as those described, for example, in U.S. Pat. No. 5,450,235 (Smith et al.) can also be incorporated in embodiments or implementations of the present application.

In some embodiments, the substrate is a carrier film that receives the adhesive 300, but then allows for the transfer of the adhesive 300 to yet another substrate. Such a carrier film may be a release liner. The carrier film may be coated with a low adhesion material such that the adhesive 300 has a higher adhesion towards the final desired substrate than to the carrier film. In some embodiments, the low adhesion material is a low surface energy material, such as silicones and fluorinated materials.

The adhesive 300 may be any suitable adhesive for the desired application. The adhesive 300 may be a heat activated adhesive. For example, at certain temperatures the adhesive 300 does not have tack but when brought to an elevated temperature range the adhesive has tack. In one embodiment, at room temperature the heat activated adhesive does not have tack, but becomes tacky at elevated temperatures, such as greater than 33°C, greater than 48°C, or greater than 65°C.

The adhesive 300 may be a pressure sensitive adhesive, which is an adhesive that is permanently tacky at room temperature (such as exhibiting a tensile storage modulus that is less than 0.1 megapascal at 1 hertz at 25° C), which adheres to a variety of surfaces with light pressure (finger pressure) with no phase change (such as liquid to solid). Exemplary pressure sensitive adhesives include crosslinked (meth)acrylic pressure-sensitive adhesives with or without tackifier. The adhesive 300 maybe blends of natural or synthetic rubber and resin, silicone or other polymer systems, with or without additives. The adhesive 300 may comprise a tackifier, plasticizer, crosslinker, or other additives such as antioxidant and ultraviolet light absorbers. In embodiments, where it is desired that in the visible light spectrum the wavelength-selective material is transparent, a visibly transparent adhesive should be used. Further, so that the adhesive 300does not interfere with the detection of the wavelength-selective film 400, the adhesive 300 should also be transparent in the wavelength range that corresponds with the wavelength-selective film 400.

In one embodiment, the adhesive 300 provides at least 54 N/m (5 ounces per inch (oz/in)), 164 N/m (15 oz/in), 274 N/m (25 oz/in), 383 N/m (35 oz/in), 493 N/m (45 oz/in), 602 N/m (55 oz/in) peel adhesion between the wavelength-selective film and the substrate.

A lamination process may be used to apply the wavelength-selective material 400 to the adhesive 300 or to apply the adhesive 300 with the wavelength-selective material 400 and substrate 200 to another substrate.

The barrier layer prevents the transfer of the wavelength-selective film to the adhesive. The materials suitable to form a barrier layer will vary depending on whether the barrier is a non-adhesive barrier or a release barrier. A non-adhesive barrier will have lower adhesion to the wavelength-selective material 400 than the adhesive 300. A wide range of non-adhesive materials are known and are suitable. Among the suitable non-adhesive materials are those that contain polymeric materials or upon curing form polymeric materials. Examples of suitable polymeric materials are nitrocelluloses, acrylics and methacrylics, polyvinyl butyrals, polyvinyl alcohols, polyurethanes, silicones, rubbers, polyolefins, and mixtures thereof.

A release barrier will have higher adhesion to the wavelength-selective material 400 than to the adhesive 300. The release barrier material can be a low surface energy material. Exemplary low surface energy materials include polyolefins, silicones, fluorinated materials, and mixtures thereof.

Light directing articles 100 and especially light directing articles 100 that are retroreflective like the ones described herein may be useful in certain machine vision detection and sensing systems. A machine vision detection system collects light from each region of the light directing article with the goal of creating a difference (contrast) between the first area 112 and second area 114. The wavelength-selective material 400 can be arranged in a pattern to create a unique identifier, such as a bar code with encoded data.

As one example, as transportation infrastructure becomes more complicated, vehicles are gaining more driving autonomy. To navigate safely and effectively, sensing modules are increasingly incorporated into these vehicles to perform tasks from parking assistance, self-regulating cruise control and lane deviation warning, to fully autonomous navigation and driving, including collision avoidance and traffic sign interpretation. Camera sensors in combination with wavelength-specific light sources could be used to illuminate a light directing article 100 and detect the pattern formed by the wavelength-selective film 400. Further processing could decode the encoded data from the detected pattern formed by the wavelength-selective material 400. The light in the driving environment can be divided into the following spectral regions: visible light in the region between about 400 and about 700 nm and light outside the visible light region. Existence of a human driver requires certain information to be read by the driver in the visible light spectrum, but it may also be desirable to have other information not visible to the driver. This can be achieved, for example, by using light outside the visible light region such as infrared and near-infrared light in the region between about 700 and about 1100 nm. Typical cameras have sensitivity that includes both of these ranges, although the sensitivity of a standard camera system decreases significantly for wavelengths longer than 1100 nm.

In one example, the light directing article 100 is used on a vehicle number plate to include a visibly transparent, machine detectable pattern that conveys information. In one example, the light directing article 100 may be used on a traffic sign, which is an article that conveys information, usually by means of alphanumeric characters, symbols, graphics, or other indicia. It would be advantageous in some applications to use the light directing article 100 to employ the desirable property of viewing indicia without changing the appearance of a signage under visible light. Such retroreflective articles would enable the reading of sign specific information meant for general consumption while avoiding driver or sign reader distraction by and/or unwanted detection of "covert" markings that become viewable with a light source and a detector set in a different wavelength region. These covert markings could be used for security purposes, identification, navigation, and inventory control. That inconspicuousness can be created with, for example, a visibly clear multi-layer optical film or a multi-layer optical film having a color that approximates the color of the signage substrate. The covert indicia could assist in signage inventory control, as is described in, for example, PCT Publication No. WO 96/35196. For example, the covert indicia could contain signage-specific information such as, for example, signage material lot number, installation date, reorder information, or product life expectancy. For example, the wavelength-selective film 400 may be arranged in a pattern to provide information such as described in PCT publication 2018/064208; PCT publication 2018/064198; and PCT publication 2018/064212.

A retroreflective highway sign could include visibly transparent and infra-red reflecting pattern attached to the retroreflective sheeting portion of the sign. Such attachment could occur, for example, during production, at the time of installation, or after installation. One advantage of such a sign is that the pattern does not interfere with the driver's fast reading of the sign as the driver drives past the sign because the indicia is not visible to the driver. But the indicia can be viewed by highway personnel or machines outfitted with an infrared camera. This identification can be used, for example, for communication of additional information to the vehicle advanced driver assistance systems or for communication of sign management functions such as maintenance requirements, logging of service life, reordering, providing navigation guidance, position, or to measure sign performance based on the information in the indicia.

Although specific embodiments have been shown and described herein, it is understood that these embodiments are merely illustrative of the many possible specific arrangements that can be devised in application of the principles of the invention. Numerous and varied other arrangements can be devised in accordance with these principles by those of skill in the art without departing from the invention. The scope of the present invention should not be limited to the structures described in this application, but only by the structures described by the scope of the claims.

## Claims

1. A process for making a patterned wavelength-selective film comprising:
providing a substrate (200) comprising an adhesive surface (300);
providing a wavelength-selective film (400);
applying a barrier (310) at a second region (114) and between the adhesive surface of the substrate and the wavelength-selective film separating the wavelength-selective film from the adhesive surface at the second region;
securing the wavelength-selective film to the adhesive surface at a first region (112), apart from the second region;
**characterised in that** the process further comprises removing portions of the wavelength-selective film from the second region to form patterned portions of the wavelength-selective film on the substrate at the first region.

2. The process of any one of the preceding claims, wherein the substrate is a retroreflective film.

3. The process of any one of the preceding claims, further comprising
applying a transparent layer to the substrate.

4. The process of claim 3, wherein the patterned portions of the wavelength selective film are between the transparent layer and the substrate.

5. The process of any one of the preceding claims, wherein the substrate is a transparent layer.

6. The process of any of the claims 3, 4 or 5, wherein the transparent layer is applied to an optically active film.

7. The process of any one of the preceding claims, wherein the wavelength-selective film is transparent in the visible light spectrum.

8. The process of any one of the preceding claims, wherein the wavelength-selective film reflects, absorbs, or scatters in the infrared or near infrared light spectrum.

9. The process of any one of the preceding claims, wherein the wavelength-selective film comprises a transfer stack of layers comprising:
a release layer compromising a metal layer or doped semi-conductor layer;
an acrylate layer overlaying the release layer;
a wavelength-selective layer overlaying the acrylate layer;
wherein a release value between the acrylate layer and the metal layer or doped semiconductor layer is from 2 to 50 grams per 2.54cm.

10. The process of any one of the preceding claims, further comprising:
capturing a continuous edge of the wavelength-selective film with the portions of the wavelength-selective film broken at the first region removed.

11. The process of any one of the preceding claims, wherein the barrier is a non-adhesive print applied to the adhesive surface and remains with the adhesive surface following removal of the wavelength-selective film from the second regions.

## Patentansprüche

1. Ein Verfahren zum Herstellen einer strukturierten wellenlängenselektiven Folie, aufweisend:
Bereitstellen eines Substrats (200), aufweisend eine Kleberoberfläche (300);
Bereitstellen einer wellenlängenselektiven Folie (400);
Aufbringen einer Barriere (310) an einem zweiten Bereich (114) und zwischen der Kleberoberfläche des Substrats und der wellenlängenselektiven Folie, die die wellenlängenselektive Folie von der Kleberoberfläche an dem zweiten Bereich trennt;
Befestigen der wellenlängenselektiven Folie an der Kleberoberfläche an einem ersten Bereich (112), entfernt von dem zweiten Bereich;
**dadurch gekennzeichnet, dass** das Verfahren ferner ein Entfernen von Abschnitten der wellenlängenselektiven Folie aus dem zweiten Bereich aufweist, um strukturierte Abschnitte der wellenlängenselektiven Folie auf dem Substrat an dem ersten Bereich auszubilden.

2. Das Verfahren nach einem der vorstehenden Ansprüche, wobei das Substrat eine retroreflektierende Folie ist.

3. Das Verfahren nach einem der vorstehenden Ansprüche, ferner aufweisend
Aufbringen einer transparenten Schicht auf das Substrat.

4. Das Verfahren nach Anspruch 3, wobei die strukturierten Abschnitte der wellenlängenselektiven Folie zwischen der transparenten Schicht und dem Substrat liegen.

5. Das Verfahren nach einem der vorstehenden Ansprüche, wobei das Substrat eine transparente Schicht ist.

6. Das Verfahren nach einem der Ansprüche 3, 4 oder 5, wobei die transparente Schicht auf eine optisch aktive Folie aufgebracht wird.

7. Das Verfahren nach einem der vorstehenden Ansprüche, wobei die wellenlängenselektive Folie in dem sichtbaren Lichtspektrum transparent ist.

8. Das Verfahren nach einem der vorstehenden Ansprüche, wobei die wellenlängenselektive Folie in dem Infrarot- oder Nahinfrarot-Lichtspektrum reflektiert, absorbiert oder streut.

9. Das Verfahren nach einem der vorstehenden Ansprüche, wobei die wellenlängenselektive Folie einen Transferstapel von Schichten aufweist, aufweisend:
eine Trennschicht, beeinträchtigend eine Metallschicht oder eine dotierte Halbleiterschicht;
eine Acrylatschicht, die die Trennschicht überlagert;
eine wellenlängenselektive Schicht, die die Acrylatschicht überlagert;
wobei ein Trennwert zwischen der Acrylatschicht und der Metallschicht oder dotierten Halbleiterschicht von 2 bis 50 Gramm pro 2,54 cm beträgt.

10. Das Verfahren nach einem der vorstehenden Ansprüche, ferner aufweisend:
Erfassen einer kontinuierlichen Kante der wellenlängenselektiven Folie, wobei die Abschnitte der wellenlängenselektiven Folie, die an dem ersten Bereich gerissen sind, entfernt sind.

11. Das Verfahren nach einem der vorstehenden Ansprüche, wobei die Barriere ein nicht klebender Druck ist, der auf der Kleberoberfläche aufgebracht wird und mit der Kleberoberfläche nach dem Entfernen der wellenlängenselektiven Folie aus den zweiten Regionen verbleibt.

## Revendications

1. Procédé de fabrication d'un film sélectif de longueur d'onde à motifs comprenant :
la fourniture d'un substrat réfléchissant (200) ayant une surface principale (300) ;
la fourniture d'un film sélectif de longueur d'onde (400) ;
l'application d'une barrière (310) au niveau d'une seconde région (114) et entre la surface adhésive du substrat et le film sélectif de longueur d'onde séparant le film sélectif de longueur d'onde de la surface adhésive au niveau de la seconde région ;
la fixation du film sélectif de longueur d'onde à la surface adhésive au niveau d'une première région (112), à distance de la seconde région ;
**caractérisé en ce que** le procédé comprend en outre le retrait de parties du film sélectif de longueur d'onde de la seconde région pour former des parties à motifs du film sélectif de longueur d'onde sur le substrat au niveau de la première région.

2. Procédé selon l'une quelconque des revendications précédentes, dans lequel le substrat est un film rétroréfléchissant.

3. Procédé selon l'une quelconque des revendications précédentes, comprenant en outre
l'application d'une couche transparente au substrat.

4. Procédé selon la revendication 3, dans lequel les parties à motifs du film sélectif de longueur d'onde se situent entre la couche transparente et le substrat.

5. Procédé selon l'une quelconque des revendications précédentes, dans lequel le substrat est une couche transparente.

6. Procédé selon l'une quelconque des revendications 3, 4 ou 5, dans lequel la couche transparente est appliquée à un film optiquement actif.

7. Procédé selon l'une quelconque des revendications précédentes, dans lequel le film sélectif de longueur d'onde est transparent dans le spectre de lumière visible.

8. Procédé selon l'une quelconque des revendications précédentes, dans lequel le film sélectif de longueur d'onde réfléchit, absorbe ou diffuse dans le spectre de lumière infrarouge ou proche infrarouge.

9. Procédé selon l'une quelconque des revendications précédentes, dans lequel le film sélectif de longueur d'onde comprend une pile de transfert de couches comprenant :
une couche de libération compromettant une couche métallique ou une couche semi-conductrice dopée ;
une couche acrylate recouvrant la couche de libération ;
une couche sélective de longueur d'onde recouvrant la couche acrylate ;
dans lequel une valeur de libération entre la couche acrylate et la couche métallique ou la couche semi-conductrice dopée est de 2 à 50 grammes par 2,54 cm.

10. Procédé selon l'une quelconque des revendications précédentes, comprenant en outre :
la capture d'un bord continu du film sélectif de longueur d'onde avec les parties du film sélectif de longueur d'onde cassées au niveau de la première région retirée.

11. Procédé selon l'une quelconque des revendications précédentes, dans lequel la barrière est une impression non adhésive appliquée sur la surface adhésive et reste avec la surface adhésive après retrait du film sélectif de longueur d'onde des secondes régions.
